# FASCICULE DE BREVET EUROPEEN

(11) **EP 4 314 695 B1**
(45) Date de publication et mention de la délivrance du brevet: **06.08.2025**
(21) Numéro de dépôt: 22719931.2
(22) Date de dépôt: 01.04.2022
(51) Int. Cl.: F41G 1/38, G02B 23/02

(54) **SYSTÈME D'OBSERVATION À GROSSISSEMENT AJUSTABLE**
BETRACHTUNGSSYSTEM MIT EINSTELLBARER VERGRÖSSERUNG
ADJUSTABLE-MAGNIFICATION VIEWING SYSTEM

(30) Priorité: 01.04.2021 FR 2103380
(43) Date de publication de la demande: 07.02.2024
(73) Titulaire: THALES, 92190 Meudon (FR)
(72) Inventeur: BIGOU, Damien, 42570 SAINT HEAND (FR)
(74) Mandataire: Atout PI Laplace
(86) Numéro de dépôt international: PCT/EP2022/058760
(87) Numéro de publication internationale: WO 2022/207909

(56) Documents cités:
- WO-A1-2018/057872
- US-A1- 2018 275 410

## Description

### Domaine technique :

L'invention relève des viseurs clairs et plus particulièrement des viseurs clairs à grossissement ajustable.

### Technique antérieure :

Les lunettes de tir sont des systèmes mécaniques ou optiques qui permettent au fantassin d'aligner son fusil avec une cible via une ligne de visée.

Cette ligne de visée peut être matérialisée par l'alignement d'une hausse et d'un guidon dans le cas d'un viseur exclusivement mécanique. Elle peut également correspondre à l'axe défini par un réticule placé au foyer d'une optique de collimation, dans le cas d'une lunette de tir optique.

De nombreuses fonctions électroniques, logicielles ou réseau, sous-jacentes à l'architecture optique proposée peuvent venir compléter cette fonction de base. Parmi ces fonctionnalités sous-jacentes, on peut citer les exemples ci-dessous :
- Fonctionnalités optoélectroniques : affichage des informations de réalité augmentée ou de réalité virtuelle dont : la symbologie, la fusion d'images par exemple avec une voie d'imagerie nocturne (intensification de lumière ou imagerie thermique) ou avec un flux vidéo externe,
- Fonctionnalités logicielles et réseau : détection de contours, reconnaissance de formes, suivi de cible, géolocalisation, compas, échange de données vidéo ou de métadonnées avec des tiers, combat collaboratif, détections de menaces.

Pour combiner ou séparer ces fonctionnalités en différentes voies optiques d'imagerie, les solutions existantes ont généralement recours à des séparations d'intensité, des séparations de pupilles, des commutations mécaniques ou des fusions numériques. La séparation d'intensité se traduit par une réduction de la luminance sur chaque voie d'imagerie. La séparation de pupille a pour effet de réduire la dimension de la pupille (ou du champ d'il s'agit d'une séparation de champ) sur chaque voie d'imagerie. La commutation mécanique ne permet pas visualiser simultanément l'image sur les deux voies. Enfin, la fusion électronique nécessite souvent des optiques disjointes, et une augmentation de l'encombrement, de la masse et du coût.

En outre, les lunettes de tir sont habituellement séparées en deux catégories :

Les « viseurs clairs », également désignés par les termes anglo-saxons « reflex sight » ou « red dot sight »,

Les lunettes de tir « monoculaires », également désignées par les termes anglo-saxons « Telescopic scope » ou « Rifle scope »,

Les viseurs clairs offrent une visée « les deux yeux ouverts », sans optique d'imagerie ce qui permet au fantassin de continuer à surveiller son environnement immédiat tout en visant une cible. Ils sont également adaptés aux situations demandant une grande réactivité et une visée rapide contrairement aux monoculaires pour lesquels le fantassin doit positionner son œil à la bonne distance de la lunette, dans sa pupille de sortie, pour pouvoir viser. Les viseurs clairs sont généralement complétés par un système afocal grossissant externe qui augmente leur encombrement et leur masse. L'ajout de cet élément transforme alors le viseur clair en monoculaire et le fantassin perd les avantages propres à la visée reflex. Il perd donc en confort d'utilisation car pour des valeurs de grossissements élevées, par exemple supérieures à x3 ou x4, le cercle oculaire est très souvent inférieur à Ø10 mm et cela le contraint à positionner son œil avec précision dans ce cercle oculaire, derrière un monoculaire, pour pouvoir viser. Dans certains environnements, lors de la visée, le fantassin peut également être gêné par des réflexions vitreuses sur des plans d'eau, des vitres de bâtiments ou de véhicules, etc. Il est certes possible de rajouter un polariseur en entrée des viseurs pour s'affranchir de ce problème, mais cet ajout réduit la transmission optique d'un facteur 2 sur la voie directe optique, ce qui réduit la portée du viseur.

Les monoculaires présentent en revanche d'autres avantages vis-à-vis des viseurs clairs. Certains d'entre eux intègrent notamment un système de grossissement bi-afocal comme la lunette Elcan Specter DR 1X/ 4X sans que cela ne modifie significativement leur encombrement. D'autres lunettes comme la Sightron SIII SS832X56LRZSMD/CM intègrent un système de grossissement continu.

La solution proposée par l'invention est un viseur clair qui exploite avantageusement les états de polarisation de la lumière pour aboutir à un système compact et léger permettant de facilement faire varier le grossissement de l'image renvoyée vers l'œil tout en combinant plusieurs fonctionnalités. Les documents WO 2018/057872 A1 et US 2018/275410 A1 entrent dans le champ de l'art antérieur de la présente invention.

### Résumé de l'invention :

A cet effet, un objet de l'invention est une lunette de tir observant une scène, ladite lunette de tir comprenant un premier sous-ensemble optique, nommé module afocal et un deuxième sous ensemble optique, nommé module d'affichage, ledit module afocal comprenant :
- un polariseur rectiligne amovible et commutable, de manière à transmettre au moins un premier état de polarisation rectiligne d'une lumière provenant de ladite scène dit état A ou un deuxième état de polarisation rectiligne de la lumière, dit B, ledit état B étant orthogonal audit état A ;
- un premier élément séparateur de polarisation agencé pour réfléchir un état de polarisation A d'une lumière transmise par ledit polariseur rectiligne ;
- un système optique afocal agencé de manière à collecter une lumière réfléchie par ledit premier élément séparateur de polarisation, ledit système optique afocal comprenant :
   ∘ un premier et un second sous-ensembles catadioptriques situés de part et d'autre du premier élément séparateur de polarisation,
   ∘ une première et une deuxième lames à retard dites afocales agencées sur le trajet de la lumière réfléchie, de part et d'autre du premier élément séparateur de polarisation, respectivement disposée entre le premier élément séparateur de polarisation et le premier sous ensemble et entre le premier élément séparateur de polarisation et le second sous-ensemble,
   ledit système optique afocal étant adapté pour former une image de la scène avec une orientation identique à une orientation de la scène observée par ladite lunette, avec un grossissement supérieur à 1, dite image grossie,
   le premier élément séparateur de polarisation étant en outre agencé pour réfléchir une lumière issue du second sous-ensemble, dite lumière AG avec un état de polarisation A,
   transportant ladite image grossie de sorte que l'axe de visée de la lumière AG soit colinéaire à un trajet d'une lumière transmise par le premier élément séparateur de polarisation, dite lumière directe, avec un état de polarisation B ;
   ledit module d'affichage comprenant :
      - une lame demi-onde dite de répartition, agencée sur le trajet de la lumière AG et de la lumière directe, après le premier élément séparateur de polarisation ;
      - un afficheur adapté pour former une image afficheur en émettant un rayonnement dit lumière afficheur ;
      - un objectif optique adapté pour collimater ladite lumière afficheur ;
      - un deuxième élément séparateur de polarisation agencé après la lame demi onde de répartition, pour transmettre un état de polarisation B, de la lumière directe ou de la lumière AG, en le combinant spatialement à la lumière afficheur collimatée, de manière à ce que ladite lunette superpose ladite image non grossie ou ladite lumière directe avec ladite image afficheur.

Selon une variante de l'invention, la lunette de l'invention comprend un troisième module, dit module vidéo comprenant :
- une lame quart d'onde dite d'imagerie, et un miroir adaptés pour transformer un état de polarisation A de la lumière AG et de la lumière directe réfléchies par le deuxième élément séparateur de polarisation en état de polarisation B, formant une lumière dite d'imagerie, le miroir étant en outre agencé pour que ladite lumière d'imagerie traverse ledit objectif afin de former ladite image grossie ou une image de la scène issue de la lumière directe dite image non grossie dans un plan focal image dudit objectif ;
- un troisième élément séparateur de polarisation agencé pour réfléchir un état de polarisation A de la lumière afficheur ;
- un photodétecteur matriciel agencé dans le plan focal dudit objectif adapté pour détecter ladite image grossie ou ladite image non grossie de la scène, le photodétecteur matriciel et l'afficheur étant situés de part et d'autre du troisième élément séparateur de polarisation.

De manière préférentielle, dans cette variante, une orientation d'un axe lent de ladite lame demi-onde de répartition présente une orientation modifiable par rapport à un plan d'incidence du second élément séparateur de polarisation et, de manière facultative, le photodétecteur matriciel est relié à un processeur adapté pour appliquer des méthodes de post-traitement de ladite image de la scène.

De manière préférentielle, dans cette variante, la lunette comprend une cellule à cristaux liquides contrôlable électroniquement et adaptée pour introduire un retard de phase compris variant de 0° à 180° modulo 360°, ladite cellule à cristaux liquide étant agencée sur le trajet optique de la lumière provenant de ladite scène, après le polariseur rectiligne et avant le premier élément séparateur de polarisation, ladite lunette comprenant un interrupteur relié à un générateur de tension commandant ladite cellule à cristaux liquides. De manière préférentielle, une direction de passage du polariseur rectiligne est orthogonale à un plan d'incidence du premier élément séparateur de polarisation, un axe lent de la cellule à cristaux liquides étant orienté à 45° modulo 90° du plan d'incidence du premier élément séparateur de polarisation.

De manière préférentielle, la lunette comprend une lame demi-onde dite amont, en amont du polariseur rectiligne adapté pour présenter un axe lent parallèle à la direction de passage du polariseur rectiligne lorsque celui-ci transmet un état de polarisation B et pour présenter un axe lent présentant une orientation à 45° de la direction de passage du polariseur rectiligne lorsque celui-ci transmet un état de polarisation A.

De manière préférentielle, le module afocal et le module vidéo sont amovibles.

Selon un premier mode de réalisation de l'invention M1, le premier et le second sous ensemble du système optique afocal sont adaptés pour former respectivement une première et une deuxième image intermédiaire réelle de la scène, et dans lequel la première et la deuxième lames à retard afocales sont des lames quart d'onde, le système afocal comprenant en outre :
- un premier miroir adapté pour réfléchir la lumière réfléchie ayant traversée le premier sous ensemble de manière à la renvoyer dans le premier sous ensemble,
- un second miroir adapté pour réfléchir la lumière réfléchie ayant traversée le second sous ensemble de manière à la renvoyer dans le second sous ensemble.

Selon un deuxième mode de réalisation de l'invention M2, le premier sous ensemble du système optique afocal est adapté pour former une image intermédiaire réelle de la scène, et dans lequel la première et la deuxième lames à retard afocales sont des lames demi d'onde, le système afocal comprenant en outre :
- un premier élément réflectif adapté pour réfléchir la lumière réfléchie ayant traversée le premier sous ensemble de manière à la renvoyer dans le premier sous ensemble,
- un second élément réflectif adapté pour réfléchir la lumière réfléchie ayant traversée le second sous ensemble de manière à la renvoyer dans le second sous ensemble,
- le premier et/ou le second élément réflectif étant adaptés pour réaliser une inversion verticale et horizontale d'un champ de vue de la lumière réfléchie.

Selon un mode de réalisation particulier du deuxième mode de réalisation M2, le premier et le second élément réflectif sont des prismes de renvoi, le premier et le second élément réflectif étant adaptés pour réaliser respectivement l'inversion verticale et horizontale du champ de vue de la lumière réfléchie ou inversement.

Alternativement, selon un mode de réalisation particulier du deuxième mode de réalisation M2, le premier élément réflectif est un coin de cube adapté pour réaliser l'inversion verticale et horizontale du champ de vue de la lumière réfléchie et le second élément est un miroir ou dans laquelle le premier élément réflectif est un miroir et le second élément est un coin de cube adapté pour réaliser l'inversion verticale et horizontale du champ de vue de la lumière réfléchie.

Selon un troisième mode de réalisation de l'invention M3, le premier sous ensemble du système optique afocal ne forme aucune image intermédiaire réelle de la scène, et dans lequel la première et la deuxième lames à retard afocales sont des lames quart d'onde, le premier sous ensemble étant formé par un miroir concave adapté pour réfléchir la lumière réfléchie ayant traversée la première lame quart d'onde, le second sous ensemble étant formé par un miroir convexe adapté pour réfléchir la lumière réfléchie ayant traversée la deuxième lame quart d'onde.

Selon un mode de réalisation particulier du troisième mode de réalisation M3, le système optique afocal comprend en outre un composant réfractif asymétrique adapté pour corriger des aberrations d'excentrement introduites par le premier élément séparateur de polarisation lors d'une traversée par la lumière réfléchie.

### Brève description des figures :

D'autres caractéristiques, détails et avantages de l'invention ressortiront à la lecture de la description faite en référence aux dessins annexés donnés à titre d'exemple et qui représentent, respectivement :

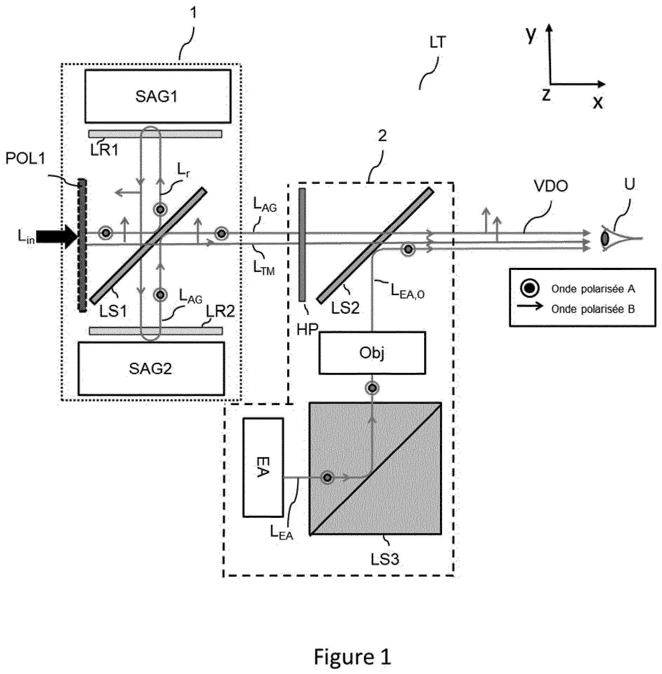

[Fig. 1], une vue schématique d'une lunette de tir LT selon l'invention,
[Fig. 2A]
   et
[Fig. 2B], le trajet optique de la lumière dans la lunette LT lorsque le polariseur laisse passer respectivement la polarisation A et la polarisation B,
[Fig. 3A], une variante préférée de l'invention dans laquelle la lunette LT comprend le troisième module amovible dit module vidéo 3,
[Fig. 3B], la variante préférée de l'invention dans laquelle la lunette LT comprend le troisième module amovible dit module vidéo 3, et dans laquelle l'orientation du polariseur POL1 vaut *θ*_{*POL*1} = 45° et l'orientation de l'axe lent de la lame de répartition HP vaut *θ*_{*λ*/2} = 45°,
[Fig. 3C], la variante préférée de l'invention dans laquelle la lunette LT comprend le troisième module amovible dit module vidéo 3, et dans laquelle l'orientation du polariseur POL1 vaut *θ*_{*POL*1} = 45° et l'orientation de l'axe lent de la lame de répartition HP vaut *θ*_{*λ*/2} = 0°,
[Fig. 3D], la variante préférée de l'invention dans laquelle la lunette LT comprend le troisième module amovible dit module vidéo 3, et dans laquelle l'orientation du polariseur POL1 vaut *θ*_{*POL*1} = 0° et l'orientation de l'axe lent de la lame de répartition HP vaut *θ*_{*λ*/2} = 0°,
[Fig. 4A]
   et

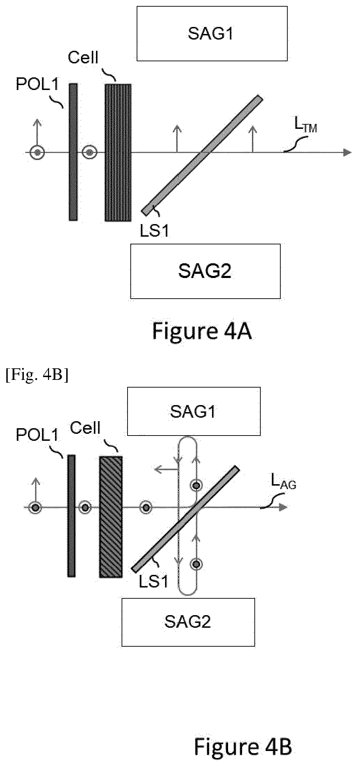

[Fig. 4B], une variante de l'invention, dans laquelle la lunette LT comprend une cellule à cristaux liquides Cell contrôlable électroniquement et adaptée pour introduire un retard de phase variant de 0° à 180° modulo 360°,
[Fig 5A],
[Fig. 5B]
   et

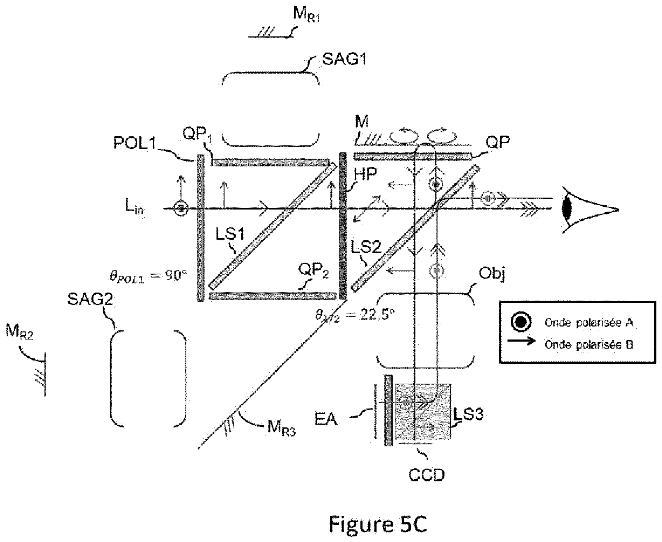

[Fig. 5C], une vue schématique d'un premier mode de réalisation de l'invention M1 dans lequel le système optique afocal est à double transport de champ et de pupille,
[Fig. 6A]
   et

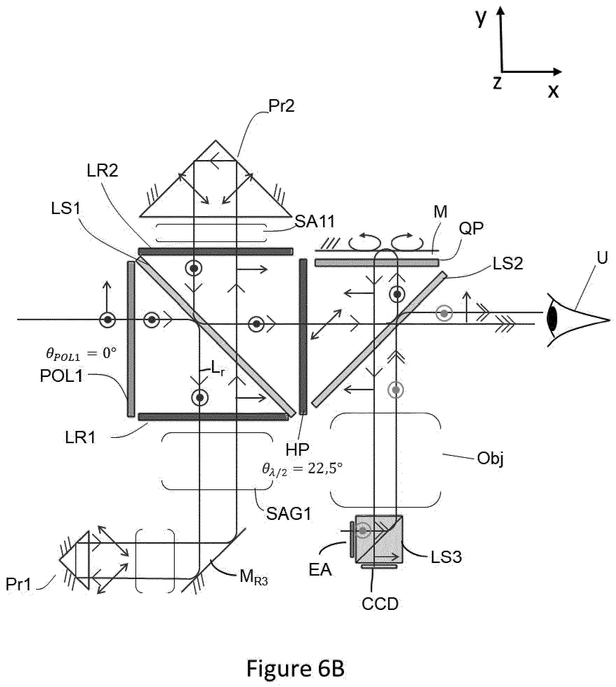

[Fig. 6B], une vue schématique d'un deuxième mode de réalisation de l'invention M2 dans lequel le système optique afocal est de type lunette de Kepler en double traversée,
[Fig. 7A]
   et

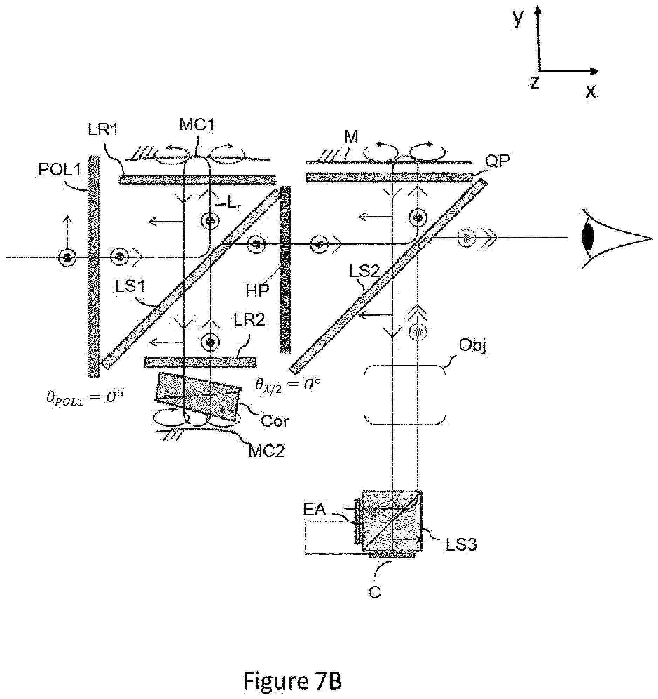

[Fig. 7B], une vue schématique d'un troisième mode de réalisation de l'invention M3 dans lequel le système optique afocal est de type lunette de Galilée en double traversée.

Les références aux figures, quand elles sont identiques, correspondent aux mêmes éléments.

Dans les figures, sauf contre-indication, les éléments ne sont pas à l'échelle.

### Description détaillée :

La figure 1 représente une vue schématique d'une lunette de tir LT selon l'invention. Cette lunette est utilisée par un utilisateur U qui observe une scène (non représentée dans la figure 1) située à l'infini par rapport à la lunette de tir LT. Cette lunette LT comprend un premier sous-ensemble optique 1, nommé module afocal et un deuxième sous ensemble optique 2 nommé module d'affichage.

Par une architecture optique inventive du module d'affichage 2 et du module afocal 1, la lunette LT de l'invention exploite avantageusement les états de polarisation de la lumière Lᵢₙ qui provient de la scène observée afin d'obtenir un système compact, modulaire et léger permettant de facilement faire varier le grossissement de l'image renvoyée vers l'œil de l'utilisateur U.

Pour cela, le module afocal 1 comprend un polariseur rectiligne POL1 amovible et commutable, de manière à transmettre un premier état de polarisation rectiligne de la lumière Lᵢₙ dit état A ou un deuxième état de polarisation rectiligne de la lumière, dit B, l'état B étant orthogonal à l'état A. Plus précisément, le polariseur POL1 de la lunette selon l'invention peut prendre *a minima* deux orientations θ_{POL1} différentes séparées d'un angle de 90° afin de transmettre une polarisation A ou B de la lumière Lᵢₙ. Pour une luminance L₀ donnée en entrée du module afocal, le polariseur POL1 transmet en sortie une luminance L₀*cos²(θ_{POL1}) sur la polarisation A et une luminance L₀*(1 - cos²(θ_{POL1})) sur la polarisation B, pour une valeur de rotation θ_{POL1} (orientation) qui est égale à 0° lorsque la direction de passage du polariseur est perpendiculaire au plan xy. A titre d'exemple non limitatif, dans la figure 1, lorsque l'orientation de POL1 vaut 0° (modulo 180°), la direction de passage du polariseur est perpendiculaire au plan d'incidence (plan xy) et POL1 transmet une polarisation A. Lorsque l'orientation de POL1 vaut 90° (modulo 180°), la direction de passage du polariseur est parallèle au plan xy et POL1 transmet une polarisation B. Dans la suite de la description, l'orientation des lames à retard et des polariseurs sera donnée avec la même référence, c'est-à-dire qu'elles auront un angle de rotation nul lorsque leur direction de passage ou la direction de l'axe lent sera orthogonale au plan xy.

Selon un mode particulier de réalisation, le polariseur POL1 est adapté pour transmettre un état de polarisation rectiligne de la lumière Lᵢₙ TE ou TM. Dans la suite de la description, par soucis de concision, on mentionnera uniquement le cas général des polarisations A ou B, mais il est entendu que l'invention peut être mise en œuvre avec les polarisations rectilignes orthogonales quelconques.

Le module afocal comprend de plus un premier élément séparateur de polarisation LS1 agencé pour réfléchir un état de polarisation A de la lumière transmise par le polariseur rectiligne POL1 (et donc réfléchir la polarisation A). Cet élément LS1 peut être un cube séparateur de polarisation ou une lame séparatrice de polarisation.

En outre, le module afocal comprend un système optique afocal agencé de manière à collecter lumière réfléchie Lᵣ par le premier élément séparateur de polarisation LS1 (polarisée A). Le système afocal comprend un premier SAG1 et un second SAG2 sous-ensembles catadioptriques situés de part et d'autre du premier élément séparateur de polarisation LS1 et une première et une deuxième lames à retard dites afocales LR₁, LR₂ agencées sur le trajet de la lumière réfléchie Lr, de part et d'autre du premier élément séparateur de polarisation LS1. Ces lames afocales LR₁, LR₂ sont respectivement disposées entre le premier élément séparateur de polarisation (LS1) et le premier sous ensemble et entre le premier élément séparateur de polarisation (LS1) et le second sous-ensemble.

Les lames afocales LR₁, LR₂ sont des lames à retards conventionnelles, par exemple des lames biréfringentes. Selon le mode de réalisation de l'invention, ces lames LR₁, LR₂ sont des lames quart d'onde (premier et troisième modes de réalisation, voir plus loin) ou des lames demi-onde (deuxième mode de réalisation, voir plus loin).

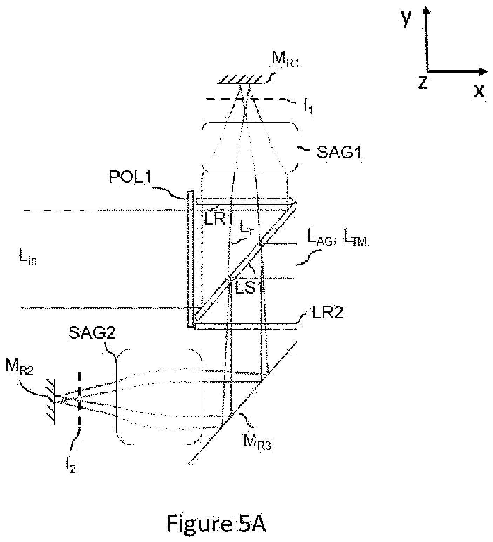

Le système optique afocal est adapté pour former une image de la scène avec une orientation identique à une orientation de la scène observée avec la lunette LT, avec un grossissement supérieur à 1. Cette image est appelée image grossie. De manière préférentielle, le grossissement est supérieur à 3, voir 5. Les figures 5A à 7B présentent trois modes de réalisation de l'invention comprenant chacun un système optique afocal différent avec des avantages distincts.

Grâce à l'agencement des lames LR₁, LR₂, la lumière collimatée issue du second sous-ensemble SAG2, dite lumière AG (notée L_{AG} en figure 1) présente une polarisation A après la traversée de la lame LR₁. Cette lumière AG transporte l'image grossie de la scène (avec une orientation « droite »). Le premier élément séparateur de polarisation LS1 est agencé pour réfléchir la lumière AG, de sorte que l'axe de visée de la lumière AG soit colinéaire à un trajet de la lumière transmise par le premier élément séparateur de polarisation, dite lumière directe L_{TM}. Cette lumière L_{TM} transporte le champ de vue de la scène provenant de l'infini, non grossi par le système optique afocal. Ainsi, l'utilisation judicieuse de l'état de polarisation de la lumière permet d'obtenir un module afocal compact formant l'image grossie de la scène - lorsque le polariseur POL1 laisse passer la polarisation A- et laissant passer la lumière directe avec une polarisation B lorsque le polariseur POL1 laisse passer la polarisation B.

A titre d'illustration non limitatif, dans la figure 1, lorsque l'orientation du polariseur fait un angle de 90° modulo 180° par rapport à la verticale (au plan yz sur la figure 1), il transmet une polarisation B et la lunette fournie une image non grossie (configuration viseur clair). A l'inverse, lorsque l'orientation du polariseur fait un angle de 0° modulo 180° par rapport à la verticale, il transmet une polarisation A et la lunette fournie une image grossie (configuration viseur monoculaire).

La lunette LT comprend de plus un module d'affichage 2 pour réaliser la superposition d'une image de la scène avec des informations visuelles. Ce module d'affichage 2 comprend un afficheur EA adapté pour émettre un rayonnement dit lumière afficheur L_{EA}. L'afficheur EA permet d'afficher une image, par exemple un symbole comme un point rouge, un texte ou encore un réticule à combiner avec l'image grossie ou le champ de vue non grossi afin de faciliter la visée de l'utilisateur ou de lui fournir des informations. La lumière issue de l'afficheur peut être non polarisée ou directement polarisé A ou elle peut être polarisée A par un polariseur rectiligne placé sur le trajet de la lumière afficheur si cette lumière n'est pas polarisée.

Le module d'affichage 2 comprend un objectif optique Obj adapté pour collimater ladite lumière afficheur, dite lumière afficheur collimaté L_{EA,O}, et ainsi former l'image de l'afficheur renvoyée à l'infini. De plus, le module d'affichage 2 comprend un deuxième élément séparateur de polarisation LS2 agencé après la lame demi-onde de répartition HP sur le trajet optique. Cet élément LS2 est adapté pour transmettre un état de polarisation B, de la lumière directe ou de la lumière AG, en le combinant spatialement à la lumière afficheur collimatée L_{EA,O} formant une lumière dit voie directe optique VDO.

Pour réaliser la combinaison du module afocal et du module d'affichage, le module d'affichage comprend une lame demi-onde dite de répartition HP agencée sur le trajet de la lumière AG et de la lumière directe, après le premier élément séparateur de polarisation LS1. L'orientation de l'axe lent de cette lame demi-onde HP est adaptée pour que la lumière AG ou la lumière directe présente une composante de polarisation B non nulle après traversée de la lame HP afin qu'elle soit transmise par LS2. A titre d'exemple non limitatif, l'axe lent de la lame HP fait un angle de 22.5° modulo 45° par rapport à la verticale de sorte que la polarisation de la lumière AG soit rectiligne avec un angle de -45° modulo 45° par rapport à la verticale après la traversée de la lame HP.

La combinaison du module afocal et du module d'affichage permet donc d'obtenir une lunette pouvant passer d'une configuration viseur clair (champ de vue non grossie) à viseur monoculaire (image grossie) et inversement par simple contrôle de l'orientation du polariseur POL1, cette orientation pouvant être facilement modifiée par l'utilisateur, par exemple à l'aide d'un simple actionneur (comme une molette ou un vernier) déporté sur la lunette (voir plus loin).

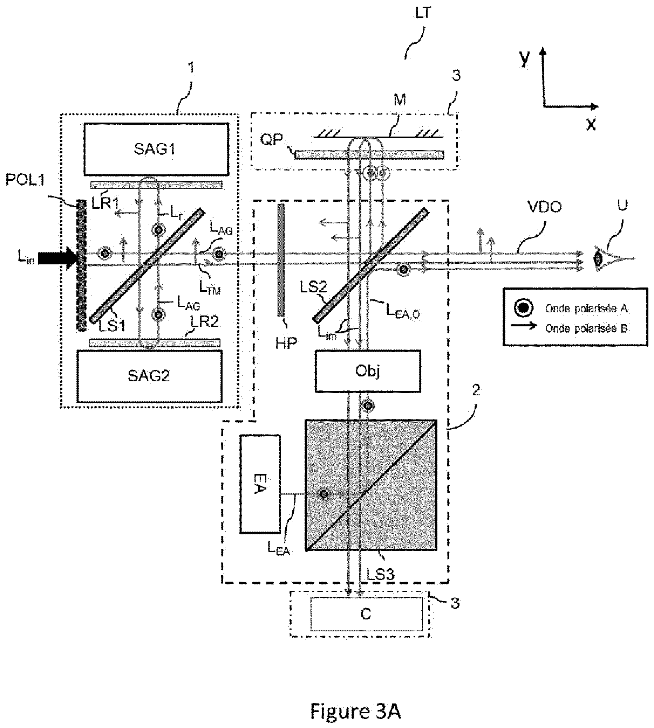

Selon l'orientation du polariseur POL1, l'utilisateur U perçoit donc en sortie de la lunette LT dans la voie directe VDO une image grossie ou non grossie (formée par la lumière directe) spatialement superposée (« augmentée ») avec l'image de l'afficheur. La lunette de l'invention présente donc une architecture compacte et modulaire qui peut être facilement combinée avec un autre module dit vidéo, permettant de détecter l'image grossie ou non grossie afin de réaliser du traitement d'image avec des algorithmes de reconnaissance de forme, de suivi de cible, etc (voir figure 3A). Pour faciliter la compréhension on dénomme image non grossie (G=1) le flux de lumière issu de la scène et transmis par le système afocal (L_{TM}), bien que le système afocal ne « forme » pas cette image.

Dans les lunettes de l'art antérieur, le rajout d'un sous-ensemble afocal permet d'appliquer un grossissement G > 1 sur la voie directe optique, dans la limite fixée par les lois de conservation de l'étendue géométrique : si le champ côté œil est étendu d'un facteur G, alors la dimension de la pupille de sortie de l'afocal sera réduite au minimum d'un facteur G également. Il en résulte une pupille de sortie de plus petite dimension lorsque G > 1, et souvent une obligation pour l'utilisateur de rigoureusement positionner son œil dans le plan de cette pupille de sortie, avec un bon alignement, sous peine de réduire son champ de visée pour cause de vignettage.

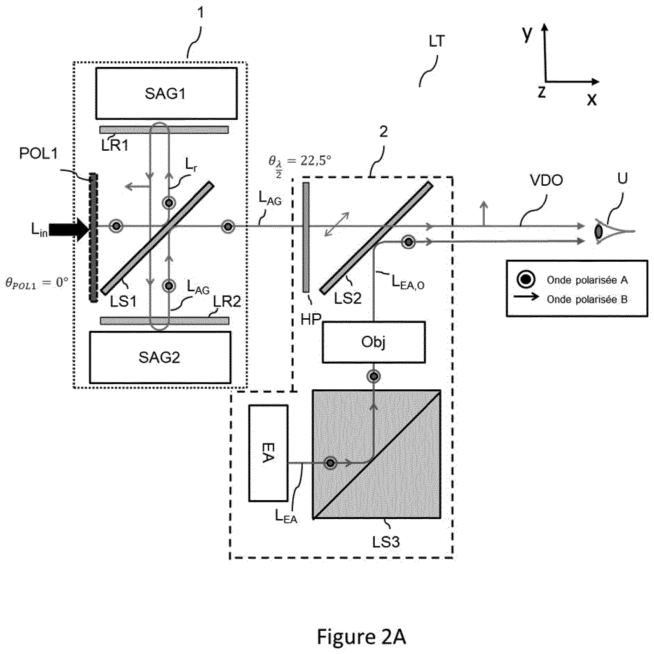

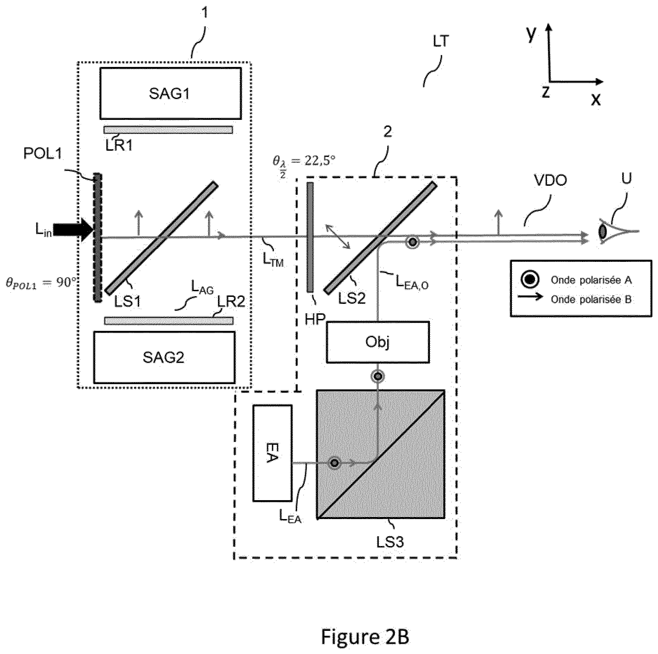

Les figures 2A et 2B illustrent le trajet optique de la lumière dans la lunette lorsque le polariseur laisse passer respectivement la polarisation A et la polarisation B.

Dans la figure 2A, le polariseur POL1 présente une orientation *θ*_{*POL*1} *=* 0° (*modulo* 180°). Il laisse donc passer une polarisation A de la lumière de la scène. Le module afocal forme donc une image grossie de la scène. La lame demi onde HP présente une orientation adaptée pour que la lumière AG la traversant présente un état de polarisation B non nul. A titre d'exemple non limitatif, la lame HP présente une orientation *θ*_{*λ*/2} = 22,5° afin que la polarisation de la lumière AG soit rectiligne avec un angle de -45° modulo 45° par rapport à la verticale après la traversée de la lame HP. La moitié du flux lumineux de la lumière AG est donc transmise par l'élément LS2 dans la voie optique VDO. La voie VDO perçue par l'utilisateur est donc la superposition spatiale de l'image grossie de la scène et de l'image afficheur.

Dans la figure 2B, le polariseur POL1 présente une orientation *θ*_{*POL*1} = 90° (*modulo* 180°). Il laisse donc passer une polarisation B de la lumière de la scène. Le module afocal transmet donc la lumière directe L_{TM}. La lame demi-onde HP présente une orientation adaptée pour que la lumière directe la traversant présente un état de polarisation B non nul. A titre d'exemple non limitatif, la lame HP présente une orientation *θ*_{*λ*/2} = 22.5° afin que la polarisation de la lumière directe soit rectiligne avec un angle de 45° modulo 45° par rapport à la verticale après la traversée de la lame HP. La moitié du flux lumineux de la lumière directe est donc transmise par l'élément LS2 dans la voie optique VDO. La lumière VDO perçue par l'utilisateur est donc la superposition spatiale du champ de vue non grossie de la scène et de l'image afficheur.

De manière préférentielle, la lame HP présente une orientation modifiable et contrôlable par l'utilisateur à l'aide d'une molette par exemple afin de pouvoir contrôler le ratio de l'intensité lumineuse de L_{TM} et L_{AG} transmise par rapport à l'intensité de la lumière afficheur collimatée L_{EA,O}, par l'élément LS2.

Selon un mode de réalisation particulier, le premier élément séparateur de polarisation LS1 est adapté pour réfléchir un état de polarisation A égal à TE et pour transmettre un état de polarisation B égal à TM. Ce mode est préféré car ainsi le polariseur POL1 élimine partiellement ou totalement la propagation d'éventuelles réflexions vitreuses naturelles (reflets sur des parebrises de véhicules, sur des plans d'eau, etc) au travers de la lunette de tir pour l'image non grossie. En effet, les réflexions vitreuses sont généralement partiellement ou totalement polarisées TE pour des incidences au voisinage de l'incidence de Brewster (incidence de 56.3° pour un indice de réfraction égal à 1.5). De manière préférentielle, dans ce mode de réalisation, la lunette comprend une lame demi-onde dite amont, en amont du polariseur rectiligne POL1. Cette lame amont présente une orientation modifiable. Elle est adapté pour présenter un axe lent parallèle à la direction de passage du polariseur rectiligne POL1 lorsque celui-ci transmet un état de polarisation TM et pour présenter un axe lent présentant une orientation à 45° de la direction de passage du polariseur rectiligne POL1 lorsque celui-ci transmet un état de polarisation TE. Cette lame amont permet ainsi de supprimer les réflexions vitreuses pour l'image grossie.

Selon un mode de réalisation, on ajoute un troisième élément séparateur de polarisation LS3 (comme illustré en figure 1), optionnel et agencé pour réfléchir un état de polarisation A de la lumière afficheur vers l'objectif Obj. Cet élément LS3 permet d'avoir un trajet de la lumière afficheur replié, donnant ainsi une lunette plus compacte.

Le polariseur POL1 est un polariseur conventionnel choisi parmi un polariseur dichroïque, un polariseur à grille, à incidence de Brewster, à couches minces ou tout autre polariseur connue de l'homme de l'art.

La figure 3A illustre une variante préférée de l'invention dans laquelle la lunette LT comprend le troisième module amovible dit module vidéo 3. Ce module comprend une lame quart d'onde dite d'imagerie QP, et un miroir M. Ces éléments sont agencés pour transformer un état de polarisation A de la lumière AG L_{AG} et de la lumière directe L_{TM} réfléchies par le deuxième élément séparateur de polarisation LS2 en état de polarisation B, formant une lumière dite d'imagerie Lᵢₘ. Afin de rendre la lunette plus compacte et de limiter le nombre de composants optiques, le miroir M est agencé pour que la lumière d'imagerie traverse l'objectif Obj dans le sens inverse du trajet de la lumière L_{EA}. L'objectif forme ainsi l'image grossie ou une image de la scène issue de la lumière directe dite image non grossie, dans le plan focal image de l'objectif.

Afin de détecter cette image grossie ou non grossie de la scène, le module vidéo comprend un photodétecteur matriciel C (ou capteur) agencé dans le plan focal de l'objectif. Pour séparer spatialement, la position du détecteur C et de l'afficheur EA, qui sont tous les deux placés dans un plan focal de l'objectif, le module vidéo comprend un troisième élément séparateur de polarisation LS3 agencé pour réfléchir un état de polarisation A de la lumière afficheur. Le photodétecteur matriciel et l'afficheur sont situés de part et d'autre du troisième élément séparateur de polarisation LS3.

De manière préférentielle, la lame HP présente une orientation modifiable afin de pouvoir contrôler l'intensité lumineuse de la lumière AG L_{AG} ou directe L_{TM} transmise par le deuxième élément séparateur LS2 par rapport à l'intensité de la lumière afficheur collimatée L_{EA,O,} réfléchie par le deuxième élément séparateur LS2. Ainsi, l'orientation de la lame HP permet d'ajuster le niveau de luminance relatif de la lumière AG ou directe par rapport à celle de l'afficheur pour renvoyer une image plus lumineuse vers l'utilisateur dans des conditions de faible éclairement de la scène par exemple.

De plus, l'orientation de la lame HP permet de contrôler le ratio R de l'intensité lumineuse de la lumière AG L_{AG} ou directe L_{TM} transmise par le deuxième élément séparateur LS2 vers l'utilisateur par rapport à l'intensité renvoyée vers le capteur C. Ceci a pour effet de moduler la quantité de lumière en voie directe optique VDO ou vers la voie d'enregistrement vidéo, que ce soit pour l'image non grossie ou grossie. En effet, pour une luminance L₁ donnée, en sortie du module afocal, la lame demi-onde HP transmet une luminance L₁*cos²(2*θ_{λ/2}) de l'image non grossie ou grossie vers l'utilisateur et transmet une luminance L₁*(1 - cos²(2*θ_{λ/2})) vers la voie d'enregistrement vidéo. Par référence, l'angle θ_{λ/2} est égal à 0° lorsque l'axe lent de la lame demi-onde est orthogonal au plan xy. Le ratio R vaut donc R= cos²(2*θ_{λ/2})/ (1 - cos²(2*θ_{λ/2})).

A titre d'exemple non limitatif, dans la figure 3A, l'axe lent de la lame HP fait un angle de θ_{λ/2}=22.5° modulo 45° de sorte que le ratio R vaut 1, lorsque le polariseur transmet une polarisation A ou B.

Grâce au module vidéo de la lunette de la figure 3A, il est possible d'enregistrer des images ou vidéos de la scène par la voie vidéo pouvant ensuite être exploitées pour faire de la reconnaissance de forme, du suivi de cible, ou tout simplement de la captation d'image pour un débriefing opérationnel en observant simultanément une image de la scène par la voie directe optique (VDO).

Comme évoqué précédemment, c'est l'orientation du polariseur POL1 qui détermine si le capteur C détecte l'image grossie ou l'image non grossie. Ainsi, la même image non grossie est renvoyée vers la voie directe optique et la voie vidéo lorsque l'orientation du polariseur POL1 fait un angle de 90° modulo 180° par rapport à la verticale (soit *θ*_{*POL*1} = 90° modulo 180°) et lorsque l'axe lent de la lame HP présente une orientation *θ*_{*λ*/2} = 22.5° par exemple (comme en figure 2B). Alternativement, la même image grossie est renvoyée vers la voie directe optique et la voie vidéo lorsque l'orientation du polariseur POL1 fait un angle de 0° modulo 180° par rapport à la verticale (soit *θ*_{*POL*1} = 0° modulo 180°) et lorsque l'axe lent de la lame HP présente une orientation *θ*_{*λ*/2} = 22.5° par exemple (comme en figure 2A). Ce mode de fonctionnement permet d'enregistrer des images et des vidéos simultanément à la visée de l'utilisateur.

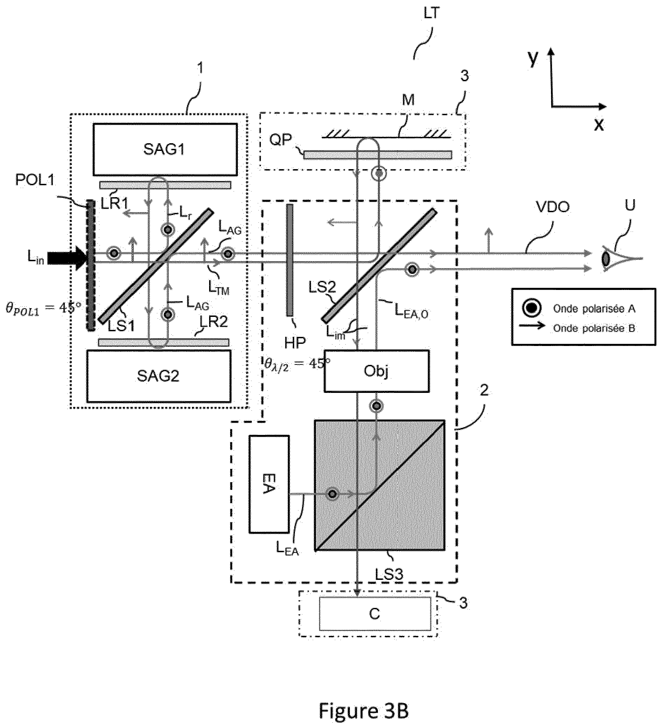

Alternativement, il est possible de renvoyer l'image non grossie en totalité vers le capteur C et parallèlement, renvoyer l'image grossie totalité vers la voie directe optique VDO. Ceci permet à l'utilisateur de disposer d'une très bonne précision de pointé visuel en voie directe optique VDO grâce à un champ de vision étroit, et d'appliquer des algorithmes de suivi de cible sur un champ large sur la voie vidéo. Ainsi, si la cible sort du champ de vision étroit en voie directe optique, elle peut continuer à être traquée dans la voie vidéo et les informations de suivi de cible sont alors affichées par réalité augmentée via l'afficheur AF. A titre d'exemple non limitatif illustré en figure 3B, cela est possible lorsque l'orientation du polariseur POL1 vaut *θ*_{*POL*1} = 45° modulo 90° et lorsque l'orientation de l'axe lent de la lame de répartition HP vaut *θ*_{*λ*/2} = 45° modulo 45°.

Il est aussi possible de renvoyer l'image non grossie en totalité vers le capteur C et parallèlement, renvoyer l'image grossie en totalité vers la voie directe optique VDO par un agencement différent. Ainsi, selon un autre mode de réalisation le polariseur rectiligne POL1 a été retiré de la lunette, de sorte que le système optique afocal transmette à la fois la lumière directe et la lumière AG. et la lame demi-onde de répartition présente un axe lent orienté *θ*_{*λ*/2} = 45° modulo 90° de sorte que la lumière directe soit totalement réfléchie vers le capteur C et que la lumière AG soit totalement transmise par le deuxième élément séparateur de polarisation.

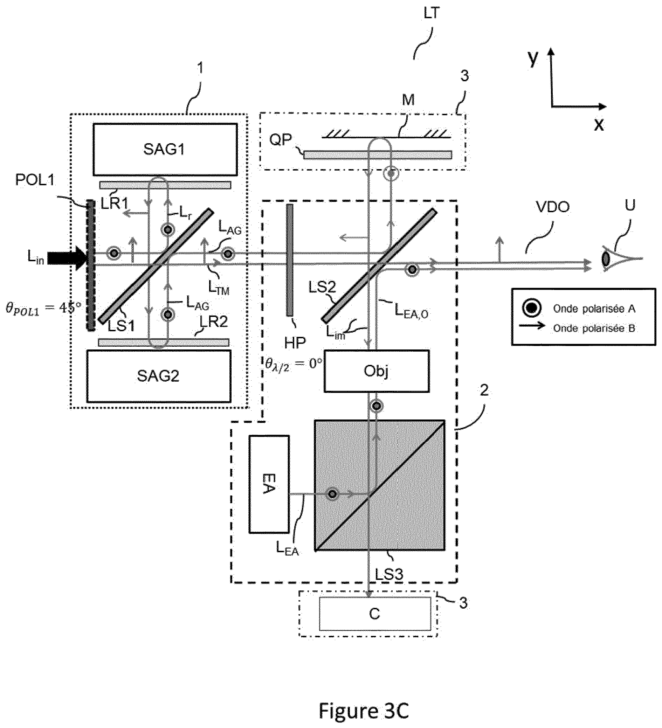

De plus, dans la lunette de la figure 3A, il est possible de renvoyer l'image non grossie en totalité vers l'œil et parallèlement, renvoyer l'image grossie en totalité vers la voie vidéo, par exemple pour augmenter la précision des algorithmes de reconnaissance ou de détection sur l'image vidéo enregistrée par le capteur C. A titre d'exemple non limitatif illustré en figure 3C, cela est possible lorsque l'orientation du polariseur POL1 vaut *θ*_{*POL*1} = 45° modulo 180° et lorsque l'orientation de l'axe lent de la lame de répartition vaut *θ*_{*λ*/2} = 0° modulo 45°.

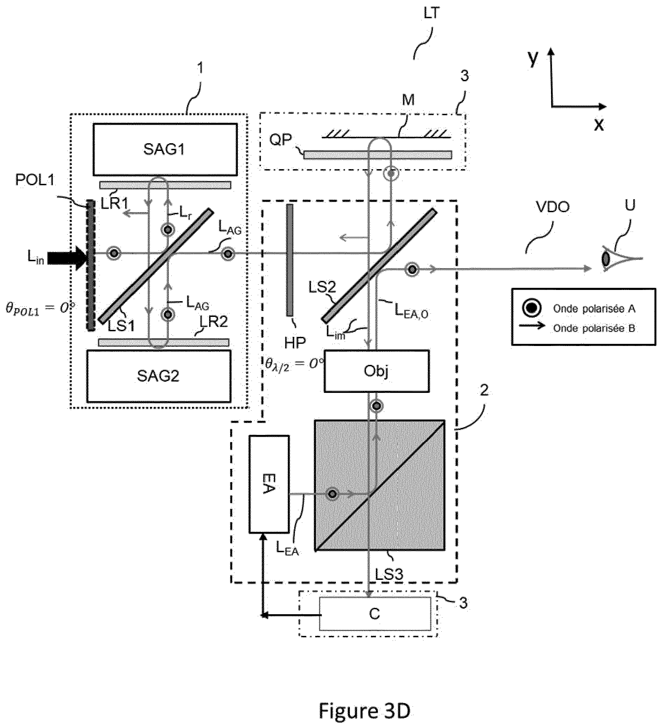

Dans un mode de réalisation de la lunette de la figure 3A, illustré en figure 3D, le photodétecteur matriciel C est relié à l'afficheur et à un processeur) adapté pour appliquer des méthodes de post-traitement de l'image de la scène détectée en voie vidéo. Ce mode de réalisation présente un intérêt avec une image grossie. Plus précisément, dans ce mode de réalisation, l'afficheur forme une image virtuelle de la scène grossie détectée par le photodétecteur qui sera transmise à l'utilisateur U. Cette image est enrichie ou traitée par des algorithmes afin de transmettre plus d'informations à l'utilisateur que l'image grossie « nue ». Ce mode de fonctionnement est un mode « réalité virtuelle ». Dans ce mode de fonctionnement, l'orientation de la lame de répartition HP est adaptée pour que 100% de l'intensité lumineuse de la lumière L_{AG} soit renvoyée vers le capteur C, c'est-à-dire réfléchie par le deuxième élément séparateur de polarisation LS2. Aucune lumière directe L_{TM} ne parvient à l'utilisateur, la seule image visible par l'utilisateur est l'image virtuelle de l'afficheur EA. Pour que 100% de l'intensité lumineuse de la lumière L_{AG} soit renvoyée vers le capteur C et que 0% de l'intensité lumineuse de la lumière L_{TM} parvienne à l'utilisateur, il faut que l'orientation du polariseur POL1 soit identique à celle de l'axe lent de la lame de répartition HP et *θ*_{*POL*1} *= θ*_{*λ*/2} = *O*° modulo 180°. Dans ce mode de réalisation, la pupille de sortie conservera un diamètre constant et maximal quel que soit le grossissement appliqué : ce diamètre est celui de la pupille de sortie de l'objectif Obj. Le tirage d'œil de la lunette LT n'est donc pas modifié lors du changement de grossissement et reste important quel que soit le grossissement choisi (G=1 ou G>1).

Les figures 4A et 4B illustrent une variante de l'invention, dans laquelle la lunette LT comprend une cellule à cristaux liquides Cell contrôlable électroniquement et adaptée pour introduire un retard de phase variant de 0° à 180° modulo 360°. Cette cellule à cristaux liquide est agencée sur le trajet optique de la lumière Lᵢₙ provenant de la scène, après le polariseur rectiligne POL1 et avant le premier élément séparateur de polarisation. De plus, la lunette comprend un interrupteur relié à un générateur de tension commandant la cellule à cristaux liquides. Ainsi, le changement de grossissement est opéré électroniquement par l'utilisateur, par un interrupteur déporté plutôt que manuellement en tournant le polariseur d'entrée comme évoqué précédemment.

Dans la figure 4A, aucune tension n'alimente la cellule Cell qui est soumise à un champ électrique E nul et les cristaux liquides ont leurs molécules orientées parallèles aux faces de la cellule, présentant une biréfringence telle que pour une cellule d'épaisseur e donnée, la cellule introduit un déphasage égal à π + 2kπ (k entier) le long de l'axe optique du viseur. La cellule à cristaux liquides se comporte alors comme une lame demi-onde qui transmet un état de polarisation orthogonal à l'état incident. C'est-à-dire que la direction de passage du polariseur POL1 est orthogonale à un plan d'incidence du premier élément séparateur de polarisation (*θ*_{*POL*1} = 0°) et qu'un axe lent de la cellule à cristaux liquides est orienté à 45° modulo 90° du plan d'incidence du premier élément séparateur de polarisation (*θ_{Cell}* = 45° modulo 90°). Le module afocal transmet la lumière issue de la scène, pour simplifier on considère qu'il « forme » alors une image non grossie de la scène.

Dans la figure 4B, l'interrupteur est actionné et la cellule Cell est alimentée par une tension et est soumise à un champ électrique E tel que les cristaux liquides sont orientés de manière à annuler leur biréfringence le long de l'axe optique du de la lunette LT. L'état de polarisation transmis par la cellule est donc inchangé, le module afocal forme alors une image grossie de la scène. et l'image grossie est renvoyée vers l'œil de l'utilisateur et/ou vers la voie d'enregistrement vidéo.

Il est bien entendu possible d'inverser le sens de fonctionnement de la cellule, de manière à ce que la cellule ne modifie pas la polarisation de la lumière en champ E nul et se comporte comme une lame demi-onde qui transmet un état de polarisation orthogonal à l'état incident en présence d'un champ E particulier. Cependant le mode de fonctionnement illustrée dans la figure 4A est préférable car, en cas de dysfonctionnement du générateur de tension, l'image non grossie est perçue par l'utilisateur. Ce qui est un mode de fonctionnement plus polyvalent et donc le mode par défaut préféré.

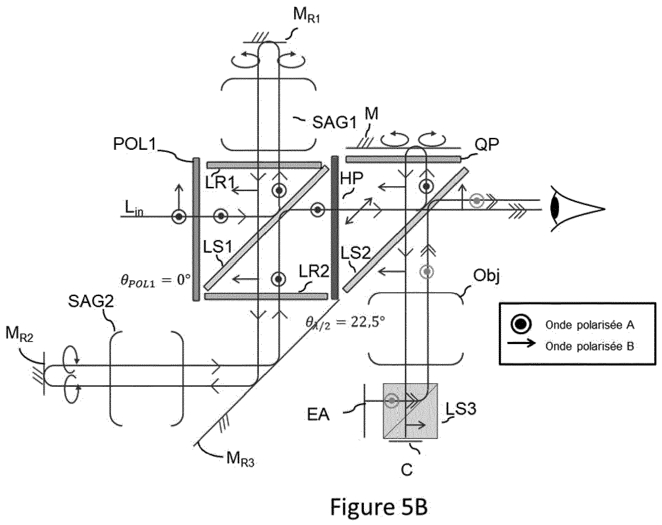

Les figures 5A, 5B et 5C illustrent schématiquement un premier mode de réalisation de l'invention M1 dans lequel le système optique afocal est à double transport de champ et de pupille. Plus précisément, la figure 5A représente le tracé de rayons lorsque le module afocal forme une image grossie. La figure 5B représente les états de polarisations et le sens de propagation des rayons lumineux lorsque la lunette forme une image grossie. La figure 5C représente les états de polarisations et le sens de propagation des rayons lumineux lorsque la lunette forme une image non grossie. Les composants précédemment détaillés ne seront pas décrits à nouveau par soucis de concision.

Dans le premier mode de réalisation M1, le premier et le second sous ensemble SAG1, SAG2 du système optique afocal sont adaptés pour former respectivement une première et une deuxième image intermédiaire réelle I₁, I₂ de la scène. De plus, la première et la deuxième lames à retard afocales LR1, LR2 sont des lames quart d'onde. Le système afocal comprend en outre un premier miroir M_{R1} adapté pour réfléchir la lumière réfléchie Lr ayant traversée le premier sous ensemble de manière à la renvoyer dans le premier sous ensemble et un second miroir M_{R2} adapté pour réfléchir la lumière réfléchie Lr ayant traversée le second sous ensemble de manière à la renvoyer dans le second sous ensemble. A titre d'exemple non limitatif, dans le premier mode de réalisation, les miroirs M_{R1} et M_{R2} sont configurés pour ne pas modifier la polarisation de la lumière. Dans le cas contraire, les traitements couches minces sur les éléments catadioptriques de la lunette ainsi que les retards de phases et orientations des éléments lames à retard seront optimisés de sorte à maximiser la transmission optique globale sur les différentes voies d'imagerie.

La lumière Lᵢₙ traverse d'abord le polariseur POL1 qui ne transmet que l'état de polarisation rectiligne selon l'axe de passage du polariseur. L'utilisateur peut modifier librement l'orientation de l'axe de passage du polariseur. Dans le cas de la figure 5B, *θ*_{*POL*1} = 0° et la polarisation A est transmise alors que dans la figure 5C, *θ*_{*POL*1} = 90° et la polarisation B est transmise. Dans la figure 5B, l'état de polarisation B est réfléchi par le premier élément séparateur de polarisation puis traverse la lame à retard LR1 (lame quart d'onde), qui la transforme en polarisation circulaire droite. La lumière traverse alors une première fois le sous ensemble SAG1 qui n'affecte pas les états de polarisation, puis se réfléchit sur le miroir MR1 qui transforme l'état de polarisation en circulaire gauche par inversion du sens de propagation de la lumière, puis retraverse le sous ensemble SAG1 puis la lame LR1 pour ressortir finalement polarisé B. La première image du champ intermédiaire I1 est formée lors de la traversée de ce premier bloc optique.

La lumière polarisée B traverse le premier élément séparateur de polarisation LS1 et se transforme en polarisation circulaire gauche après avoir traversé la lame à retard de phase LR2 (une lame quart d'onde ici). Cette lumière se réfléchie sur le miroir MR3, traverse alors une première fois le sous ensemble SAG2 qui n'affecte pas les états de polarisation, puis se réfléchit sur le miroir MR2 qui transforme l'état de polarisation en circulaire droit par inversion du sens de propagation de la lumière, puis retraverse le sous ensemble SAG2 puis la lame LR2 pour ressortir finalement polarisé A. La deuxième image du champ intermédiaire I2 est formée lors de la traversée de ce deuxième bloc optique permettant de redresser l'image de la scène formée par le module afocal. Le miroir MR3 est optionnel et permet de couder le trajet optique afin de rendre le module afocal plus compact.

Dans le mode de réalisation où le traitement réflectif du miroir MR3 déphase la lumière polarisée A par rapport à la lumière polarisée B, il est préférable de positionner la lame quart d'onde LR2 entre ce miroir MR3 et le second sous ensemble SAG2, de sorte que ce miroir ne soit intercepté que par des ondes A ou B, et non des polarisations circulaires, ce qui permettra de ne pas affecter les états de polarisation lors de la réflexion sur sa surface.

De manière préférentielle, le premier sous ensemble SAG1 est conçu tel que la traversée du premier élément LS1 se fasse à faible ouverture numérique afin de minimiser les aberrations d'excentrement introduites par LS1. Typiquement, cette ouverture numérique est préférentiellement inférieure à 0.10.

Le reste du dispositif fonctionne comme évoqué précédemment. A titre d'exemple non limitatif, dans les figures 5B et 5C, l'orientation de l'axe lent des lames quart d'onde LR1, LR2 est de *θ*_{*LR*1,*LR*2} = 45° afin que la polarisation de la lumière réfléchie passe de A à B ou de B à A avant de traverser à nouveau l'élément LS1. De plus, la lame demi-onde HP est tournée d'un angle *θ*_{*λ*/2}=22.5°, et la polarisation transmise est rectiligne orientée à 45°. Ainsi, lorsque la lumière directe ou AG intercepte le deuxième élément LS2 la moitié du flux lumineux polarisé B est transmis vers l'œil de l'utilisateur et l'autre moitié polarisée B en renvoyée vers la voie vidéo (ratio R=1). Ainsi, dans la figure 5B, le 50% de l'intensité de la lumière AG est renvoyée vers la voie vidéo et 50% est transmise dans la voie directe optique VDO. Dans la figure 5C, 50% de la lumière directe est renvoyée vers la voie vidéo et 50% est transmise dans la voie directe optique VDO. Le premier mode de réalisation M1 possède une architecture simple et robuste permettant de redresser l'image de la scène formée par le module afocal. Cependant, le fait d'avoir à reformer une double image du champ et de la pupille requiert l'usage de nombreux composants optiques pour parvenir à une bonne correction des aberrations, et peut être un inconvénient dans le cas où l'on souhaite réduire la masse et l'encombrement de ce sous-ensemble afocal.

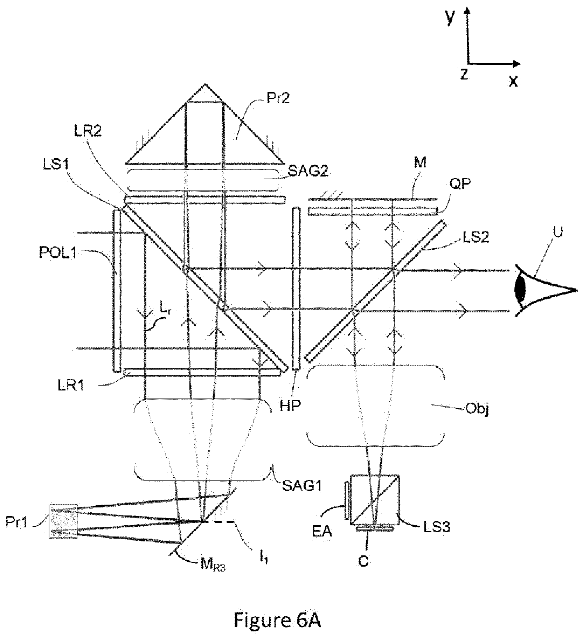

Les figures 6A et 6B illustrent schématiquement un deuxième mode de réalisation de l'invention M2 dans lequel le système optique afocal est de type lunette de Kepler en double traversée. Plus précisément, la figure 6A représente le tracé de rayons au sein de la lunette lorsque le module afocal forme une image grossie. La figure 6B représente les états de polarisations et le sens de propagation des rayons lumineux lorsque la lunette forme une image grossie. Le principe de fonctionnement étant similaire à celui de l'afocal du mode M1, ne seront donc décrites ci-après que les modifications apportées par l'afocal du mode M2 vis-à-vis de l'afocal du mode M1.

Dans le mode M2, le premier sous ensemble SAG1 du système optique afocal est adapté pour former une image intermédiaire réelle I₁ de la scène, cette image étant formée dans n'importe quel plan. Dans le mode M2 première et la deuxième lames à retard afocales LR1, LR2 sont des lames demi d'onde Le système optique afocal comprend en outre un premier élément réflectif P_{R1} adapté pour réfléchir la lumière réfléchie Lr ayant traversée le premier sous ensemble SAG1, de manière à la renvoyer dans le premier sous ensemble. De plus, un second élément réflectif P_{R2} est adapté pour réfléchir la lumière réfléchie Lr ayant traversée le second sous ensemble SAG2 de manière à la renvoyer dans le second sous ensemble. Le premier et/ou le second élément réflectif P_{R1}, P_{R2} sont adaptés pour réaliser une inversion verticale et horizontale d'un champ de vue de la lumière réfléchie afin que le système optique afocal forme une image grossie redressée de la scène. A cet effet, le premier et le second élément réflectif sont des prismes de renvoi comme illustré dans les figures 6A et 6B. L'un des prismes P_{R1}, P_{R2} doit réaliser une inversion d'image (haut/bas) par repli dans le plan horizontal xy, l'autre prisme doit réaliser une réversion (gauche/droite) par repli dans le plan vertical yz. Cependant, par souci de simplification, les replis réalisés par ces deux prismes ont tous deux été représentés dans le plan horizontal xy. Le redressement d'image haut/bas peut être réalisé par le prisme P_{R1} ou le prisme Pₐ₂ et inversement pour le redressement d'image gauche/droite.

Alternativement, le premier élément réflectif P_{R1} est un coin de cube adapté pour réaliser l'inversion verticale et horizontale du champ de vue de la lumière réfléchie et le second élément réflectif P_{R2} est un miroir. L'opposé est bien entendu possible, c'est-à-dire, que le premier élément réflectif est un miroir et le second élément est un coin de cube adapté pour réaliser l'inversion verticale et horizontale du champ de vue de la lumière réfléchie.

Le reste du dispositif fonctionne comme évoqué précédemment.

A titre d'exemple non limitatif, dans la figure 6B, les lames demi-onde présentent un axe lent orienté selon un angle *θ*_{*λ*/2}=22.5° afin que la lumière ayant retraversée SAG1 et interceptant LS2 soit polarisée B et que la lumière ayant retraversée SAG2 et interceptant LS2 soit polarisée A. De plus, le polariseur POL1 présente une orientation *θ*_{*POL*1} = 0° et lame demi-onde HP est tournée d'un angle *θ*_{*λ*/2}=22.5°, et la polarisation transmise est rectiligne orientée à 45°. Ainsi, lorsque la lumière AG intercepte le deuxième élément LS2 la moitié du flux lumineux polarisé B est transmis vers l'œil de l'utilisateur et l'autre moitié polarisée B en renvoyée vers la voie vidéo (ratio R=1).

Cette architecture du mode M2 possède l'avantage de ne reformer qu'une seule image intermédiaire du champ, ce qui rend la correction des aberrations plus aisée que dans le mode de réalisation M1 et l'inconvénient d'être dépendant des déphasages introduits par les réflexions sur les faces des éléments Pr1, Pr2 et MR3 qui peuvent se traduire par une perte de transmission optique au travers du système afocal complet. Mais cet inconvénient peut être minimisé en optimisant les retards de phase introduits lors de ces réflexions ainsi que ceux des lames à retard LR1 et LR2.

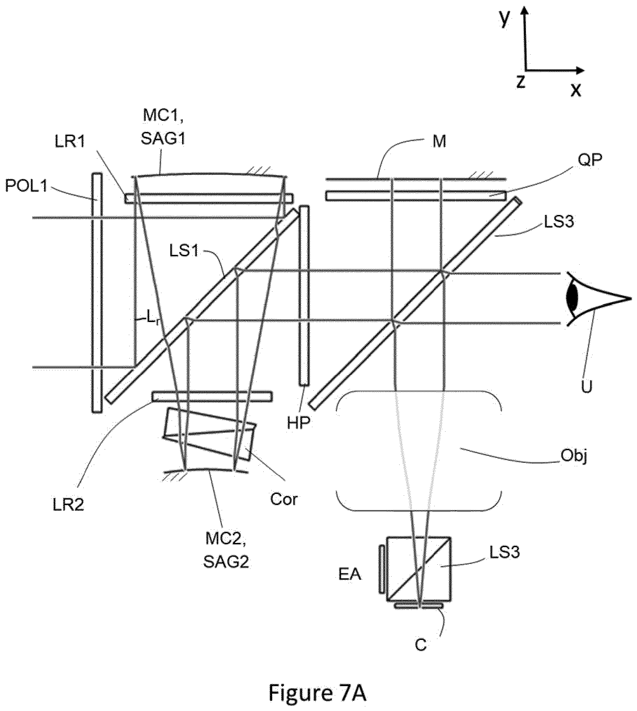

Les figures 7A et 7B illustrent schématiquement un troisième mode de réalisation de l'invention M3 dans lequel le système optique afocal est de type de type lunette de Galilée en double traversée. Plus précisément, la figure 7A représente le tracé de rayons au sein de la lunette lorsque le module afocal forme une image grossie. La figure 7B représente les états de polarisations et le sens de propagation des rayons lumineux lorsque la lunette forme une image grossie renvoyée à 100% vers la voie vidéo. Le principe de fonctionnement étant similaire à celui de l'afocal du mode M1 et M2, ne seront donc décrites ci-après que les modifications apportées par l'afocal du mode M3 vis-à-vis de l'afocal du mode M1 et M2. Contrairement à l'architecture optique du mode M2, la lunette de Galilée ne reforme pas d'image réelle du champ ; il n'est donc pas nécessaire de procéder à un redressement d'image.

Cette lunette présente l'avantage d'être très compacte, mais a pour inconvénient de posséder une pupille de sortie virtuelle se traduisant à l'usage par un champ d'observation fortement réduit en voie directe optique VDO pour l'image grossie, y compris pour de faibles tirages d'œil. Le tirage d'œil et le champ de vision en voie directe optique VDO ne sont cependant pas affectés pour la lumière directe et l'image non grossie, puisque le trajet optique dans ce cas ne traverse pas la lunette de Galilée.

Dans le mode de réalisation M3, le système optique afocal ne forme aucune image intermédiaire réelle de la scène et la première et la deuxième lames à retard afocales LR1, LR2 sont des lames quart d'onde (voir la figure 5B pour une description des états de polarisation au sein de la lunette). Dans ce mode M3, le premier sous ensemble est formé par un miroir concave MC1 adapté pour réfléchir la lumière réfléchie Lr ayant traversée la première lame quart d'onde et le second sous ensemble est formé par un miroir convexe MC2 adapté pour réfléchir la lumière réfléchie Lr ayant traversée la deuxième lame quart d'onde.

Le premier élément LS1 est traversé par la lumière réfléchie par le miroir concave MC1 en faisceau convergent ce qui introduit de fortes aberrations d'excentrement sur l'imagerie de champ. De manière préférentielle, ces aberrations d'excentrement sont compensées en introduisant un élément asymétrique par exemple un composant réfractif asymétrique Cor, sans rajouter de chromatisme d'excentrement ni de déviation angulaire sur l'imagerie de champ.

Selon un mode de réalisation, l'axe de visée de la lunette lorsque le module afocal forme une image grossie peut être ajusté en décentrant les miroirs MC1 ou MC2 ou encore en jouant sur l'angle de rotation du composant Cor dans le plan horizontal xy ou vertical yz.

Selon un mode de réalisation, le miroir concave MC1 être remplacé par un miroir de Mangin pour compenser l'aberration sphérique résiduelle.

De manière préférentielle, la lunette LT du mode M3 résout le problème du champ d'observation fortement réduit en voie directe optique VDO pour l'image grossie, en renvoyant l'intégralité de la lumière traversant le module afocal vers la voie d'imagerie vidéo (mode réalité virtuelle précédemment évoqué). Ainsi, l'afficheur connecté au capteur C renvoi cette image sous forme de réalité virtuelle vers l'œil de l'utilisateur. Ce mode de fonctionnement est illustré en figure 7B. A titre d'exemple non limitatif, ce mode de fonctionnement est possible lorsque l'orientation du polariseur POL1 est identique à celle de l'axe lent de la lame de répartition HP et *θ*_{*POL*1} *= θ*_{*λ*/2} = *O*°. Cette architecture du mode M3 présente l'avantage d'être plus compacte, plus légère et de meilleure qualité optique que les modes M1 et M2. Elle présente l'inconvénient d'être peu adaptée à une visée en voie directe sur l'image grossie car la pupille de sortie du sous-ensemble afocal est virtuelle. Il est alors préférable d'avoir recours à un mode « réalité virtuelle » pour visualiser l'image grossie sur la voie directe, ce qui permet d'un part de disposer d'une grande pupille de sortie et d'un grand tirage d'œil, et de pouvoir ajuster la luminosité de l'afficheur en fonction des conditions extérieures. Cependant, ce mode apporte un surplus de consommation électrique par le recours simultané à la caméra et à l'afficheur.

## Revendications

1. Lunette de tir (LT) observant une scène, ladite lunette de tir comprenant un premier sous-ensemble (1) optique, nommé module afocal et un deuxième sous ensemble optique (2), nommé module d'affichage,
ledit module afocal (1) comprenant :
- un polariseur rectiligne (POL1) amovible et commutable, de manière à transmettre au moins un premier état de polarisation rectiligne d'une lumière (Lᵢₙ) provenant de ladite scène dit état A ou un deuxième état de polarisation rectiligne de la lumière, dit B, ledit état B étant orthogonal audit état A ;
- un premier élément séparateur de polarisation (LS1) agencé pour réfléchir un état de polarisation A d'une lumière transmise par ledit polariseur rectiligne ;
- un système optique afocal agencé de manière à collecter une lumière réfléchie (Lᵣ) par ledit premier élément séparateur de polarisation, ledit système optique afocal comprenant :
∘ un premier (SAG1) et un second (SAG2) sous-ensembles catadioptriques situés de part et d'autre du premier élément séparateur de polarisation,
∘ une première et une deuxième lames à retard dites afocales (LR₁, LR₂) agencées sur le trajet de la lumière réfléchie (Lr), de part et d'autre du premier élément séparateur de polarisation (LS1), respectivement disposée entre le premier élément séparateur de polarisation (LS1) et le premier sous ensemble (SAG1) et entre le premier élément séparateur de polarisation (LS1) et le second sous-ensemble (SAG2),
ledit système optique afocal étant adapté pour former une image de la scène avec une orientation identique à une orientation de la scène observée par ladite lunette, avec un grossissement supérieur à 1, dite image grossie,
le premier élément séparateur de polarisation (LS1) étant en outre agencé pour réfléchir une lumière issue du second sous-ensemble (SAG2), dite lumière AG (L_{AG}) avec un état de polarisation A, transportant ladite image grossie de sorte que l'axe de visée de la lumière AG soit colinéaire à un trajet d'une lumière transmise par le premier élément séparateur de polarisation, dite lumière directe (L_{TM}), avec un état de polarisation B ;
ledit module d'affichage comprenant :
- une lame demi-onde dite de répartition (HP), agencée sur le trajet de la lumière AG et de la lumière directe, après le premier élément séparateur de polarisation ;
- un afficheur (EA) adapté pour former une image afficheur en émettant un rayonnement dit lumière afficheur (L_{EA}) ;
- un objectif optique (Obj) adapté pour collimater ladite lumière afficheur ;
- un deuxième élément séparateur de polarisation (LS2) agencé après la lame demi onde de répartition, pour transmettre un état de polarisation B, de la lumière directe ou de la lumière AG, en le combinant spatialement à la lumière afficheur collimatée (L_{EA,O}), de manière à ce que ladite lunette superpose ladite image non grossie ou ladite lumière directe avec ladite image afficheur.

2. Lunette selon la revendication 1, comprenant en outre un troisième module, dit module vidéo (3) comprenant :
- une lame quart d'onde dite d'imagerie (QP), et un miroir (M) adaptés pour transformer un état de polarisation A de la lumière AG et de la lumière directe réfléchies par le deuxième élément séparateur de polarisation en état de polarisation B, formant une lumière dite d'imagerie (Lᵢₘ), le miroir étant en outre agencé pour que ladite lumière d'imagerie traverse ledit objectif afin de former ladite image grossie ou une image de la scène issue de la lumière directe dite image non grossie dans un plan focal image dudit objectif ;
- un troisième élément séparateur de polarisation (LS3) agencé pour réfléchir un état de polarisation A de la lumière afficheur ;
- un photodétecteur matriciel (C) agencé dans le plan focal dudit objectif adapté pour détecter ladite image grossie ou ladite image non grossie de la scène, le photodétecteur matriciel et l'afficheur étant situés de part et d'autre du troisième élément séparateur de polarisation.

3. Lunette selon la revendication précédente, dans laquelle une orientation d'un axe lent de ladite lame demi-onde de répartition (HP) présente une orientation modifiable par rapport à un plan d'incidence du second élément séparateur de polarisation (LS2).

4. Lunette selon la revendication précédente, dans laquelle le photodétecteur matriciel est relié à un processeur adapté pour appliquer des méthodes de post-traitement de ladite image de la scène.

5. Lunette selon l'une quelconque des revendications précédentes, comprenant une cellule à cristaux liquides (Cell) contrôlable électroniquement et adaptée pour introduire un retard de phase compris variant de 0° à 180° modulo 360°, ladite cellule à cristaux liquide étant agencée sur le trajet optique de la lumière (Lᵢₙ) provenant de ladite scène, après le polariseur rectiligne (POL1) et avant le premier élément séparateur de polarisation, ladite lunette comprenant un interrupteur relié à un générateur de tension commandant ladite cellule à cristaux liquides.

6. Lunette selon la revendication précédente, dans laquelle une direction de passage du polariseur rectiligne est orthogonale à un plan d'incidence du premier élément séparateur de polarisation, un axe lent de la cellule à cristaux liquides étant orienté à 45° modulo 90° du plan d'incidence du premier élément séparateur de polarisation.

7. Lunette selon l'une quelconque des revendications précédentes, comprenant une lame demi-onde dite amont, en amont du polariseur rectiligne (POL1) adapté pour présenter un axe lent parallèle à la direction de passage du polariseur rectiligne (POL1) lorsque celui-ci transmet un état de polarisation B et pour présenter un axe lent présentant une orientation à 45° de la direction de passage du polariseur rectiligne (POL1) lorsque celui-ci transmet un état de polarisation A.

8. Lunette selon l'une quelconque des revendications 2 à 7, dans laquelle le module afocal et le module vidéo sont amovibles.

9. Lunette selon l'une quelconque des revendications précédentes, dans lequel le premier et le second sous ensemble (SAG1, SAG2) du système optique afocal sont adaptés pour former respectivement une première et une deuxième image intermédiaire réelle (I₁, I₂) de la scène, et dans lequel la première et la deuxième lames à retard afocales sont des lames quart d'onde, le système afocal comprenant en outre :
- un premier miroir (M_{R1}) adapté pour réfléchir la lumière réfléchie (Lr) ayant traversée le premier sous ensemble de manière à la renvoyer dans le premier sous ensemble,
- un second miroir (M_{R2}) adapté pour réfléchir la lumière réfléchie (Lr) ayant traversée le second sous ensemble de manière à la renvoyer dans le second sous ensemble.

10. Lunette selon l'une quelconque des revendications 1 à 8, dans lequel le premier sous ensemble (SAG1) du système optique afocal est adapté pour former une image intermédiaire réelle (I₁) de la scène, et dans lequel la première et la deuxième lames à retard afocales sont des lames demi d'onde, le système afocal comprenant en outre :
- un premier élément réflectif (P_{R1}) adapté pour réfléchir la lumière réfléchie (Lr) ayant traversée le premier sous ensemble de manière à la renvoyer dans le premier sous ensemble,
- un second élément réflectif (P_{R2}) adapté pour réfléchir la lumière réfléchie (Lr) ayant traversée le second sous ensemble de manière à la renvoyer dans le second sous ensemble, le premier et/ou le second élément réflectif (P_{R1}, P_{R2}) étant adaptés pour réaliser une inversion verticale et horizontale d'un champ de vue de la lumière réfléchie.

11. Lunette selon la revendication précédente, dans laquelle le premier et le second élément réflectif sont des prismes de renvoi, le premier et le second élément réflectif (P_{R1}, P_{R2}) étant adaptés pour réaliser respectivement l'inversion verticale et horizontale du champ de vue de la lumière réfléchie ou inversement.

12. Lunette selon la revendication 10, dans laquelle le premier élément réflectif est un coin de cube adapté pour réaliser l'inversion verticale et horizontale du champ de vue de la lumière réfléchie et le second élément est un miroir ou dans laquelle le premier élément réflectif est un miroir et le second élément est un coin de cube adapté pour réaliser l'inversion verticale et horizontale du champ de vue de la lumière réfléchie.

13. Lunette selon l'une quelconque des revendications 1 à 8, dans laquelle le premier sous ensemble (SAG1) du système optique afocal ne forme aucune image intermédiaire réelle de la scène, et dans lequel la première et la deuxième lames à retard afocales sont des lames quart d'onde,
le premier sous ensemble étant formé par un miroir concave (MC1) adapté pour réfléchir la lumière réfléchie (Lr) ayant traversée la première lame quart d'onde
le second sous ensemble étant formé par un miroir convexe (MC2) adapté pour réfléchir la lumière réfléchie (Lr) ayant traversée la deuxième lame quart d'onde.

14. Lunette selon la revendication précédente, dans lequel le système optique afocal comprend en outre un composant réfractif asymétrique adapté pour corriger des aberrations d'excentrement introduites par le premier élément séparateur de polarisation lors d'une traversée par la lumière réfléchie.

## Patentansprüche

1. Zielfernrohr (LT) zur Beobachtung einer Szene, wobei das Zielfernrohr eine erste optische Teilmenge (1), die als afokales Modul bezeichnet wird, und eine zweite optische Teilmenge (2), die als Anzeigemodul bezeichnet wird, umfasst,
wobei das afokale Modul (1) Folgendes umfasst:
- einen abnehmbaren und umschaltbaren geradlinigen Polarisator (POL1), um mindestens einen ersten geradlinigen Polarisationszustand eines von der Szene stammenden Lichts (Lᵢₙ), der als Zustand A bezeichnet wird, oder einen zweiten geradlinigen Polarisationszustand des Lichts, der als B bezeichnet wird, zu übertragen, wobei der Zustand B orthogonal zum Zustand A ist;
- ein erstes Polarisations-Trennelement (LS1), das so angeordnet ist, dass es einen Polarisationszustand A eines von dem geradlinigen Polarisator übertragenen Lichts reflektiert;
- ein afokales optisches System, das so angeordnet ist, dass es ein von dem ersten Polarisations-Trennelement reflektiertes Licht (Lr) sammelt, wobei das afokale optische System Folgendes umfasst:
o eine erste (SAG1) und eine zweite (SAG2) katadioptrische Teilmenge, die sich auf beiden Seiten des ersten Polarisations-Trennelements befinden,
o eine erste und eine zweite Verzögerungsplatte (LR₁, LR₂), die als afokal bezeichnet wird und die auf dem Pfad des reflektierten Lichts (Lr) beiderseits des ersten Polarisations-Trennelements (LS1) angeordnet sind, jeweils zwischen dem ersten Polarisations-Trennelement (LS1) und der ersten Teilmenge (SAG1) und zwischen dem ersten Polarisations-Trennelement (LS1) und der zweiten Teilmenge (SAG2) angeordnet sind,
wobei das afokale optische System angepasst ist, um ein Bild der Szene mit einer Ausrichtung zu bilden, die identisch ist zu einer Ausrichtung der Szene, die durch das Fernrohr beobachtet wird, mit einer Vergrößerung größer als 1, das als vergrößertes Bild bezeichnet wird,
wobei das erste Polarisations-Trennelement (LS1) ferner so angeordnet ist, dass es ein Licht, das aus der zweiten Teilmenge (SAG2) hervorgeht und das als AG-Licht (L_{AG}) bezeichnet wird, mit einem Polarisationszustand A reflektiert, und das vergrößerte Bild so transportiert, dass die Zielachse des AG-Lichts kollinear zu einem Pfad eines durch das erste Polarisations- Trennelement übertragenen Lichts, das als direktes Licht (L_{TM}) bezeichnet wird, mit einem Polarisationszustand B ist;
wobei das Anzeigemodul Folgendes umfasst:
- eine Halbwellenplatte, die als Verteilungs-Halbwellenplatte (HP) bezeichnet wird, die auf dem Pfad des AG-Lichts und des direkten Lichts nach dem ersten Polarisations-Trennelement angeordnet ist;
- eine Anzeige (EA), die dazu angepasst ist, durch Aussenden einer Strahlung, die als Anzeigelicht (L_{EA}) bezeichnet wird, ein Anzeigebild zu bilden;
- ein optisches Objektiv (Obj), das zum Kollimieren des Anzeigelichts angepasst ist;
- ein zweites Polarisations-Trennelement (LS2), das nach der Verteilungs-Halbwellenplatte angeordnet ist, um einen Polarisationszustand B des direkten Lichts oder des AG-Lichts zu übertragen, indem es räumlich mit dem kollimierten Anzeigelicht (L_{EA,O}) kombiniert wird, sodass das Fernrohr das nicht vergrößerte Bild oder das direkte Licht mit dem Anzeigebild überlagert.

2. Fernrohr nach Anspruch 1, ferner umfassend ein drittes Modul, das als Videomodul (3) bezeichnet wird, das Folgendes umfasst:
- eine Viertelwellenplatte, die als Bildgebungs-Viertelwellenplatte (QP) bezeichnet wird, und einen Spiegel (M), die so angepasst sind, dass sie einen Polarisationszustand A des AG-Lichts und des direkten Lichts, das von dem zweiten Polarisations-Trennelement reflektiert wird, in einen Polarisationszustand B umwandeln und ein Licht, das als Bildgebungslicht (Lᵢₘ) bezeichnet wird, bilden, wobei der Spiegel ferner so angeordnet ist, dass das Bildgebungslicht durch das Objektiv hindurchgeht, um das vergrößerte Bild oder ein Bild der Szene, das aus dem direkten Licht hervorgeht und das als nicht vergrößertes Bild bezeichnet wird, in einer Brennebene des Objektivs zu bilden;
- ein drittes Polarisations-Trennelement (LS3), das so angeordnet ist, dass es einen Polarisationszustand A des Anzeigelichts reflektiert;
- einen Matrix-Fotodetektor (C), der in der Brennebene des Objektivs angeordnet und zum Erfassen des vergrößerten Bildes oder des nicht vergrößerten Bildes der Szene angepasst ist, wobei sich der Matrix-Fotodetektor und die Anzeige auf beiden Seiten des dritten Polarisations-Trennelements befinden.

3. Fernrohr nach dem vorhergehenden Anspruch, wobei eine Ausrichtung einer langsamen Achse der Verteilungs-Halbwellenplatte (HP) eine veränderbare Ausrichtung in Bezug auf eine Einfallsebene des zweiten Polarisations-Trennelements (LS2) aufweist.

4. Fernrohr nach dem vorhergehenden Anspruch, wobei der Matrix-Fotodetektor mit einem Prozessor verbunden ist, der angepasst ist, um Nachverarbeitungsmethoden an dem Bild der Szene anzuwenden.

5. Fernrohr nach einem der vorhergehenden Ansprüche, umfassend eine elektronisch steuerbare Flüssigkristallzelle (Cell), die so angepasst ist, dass sie eine Phasenverzögerung von 0° bis 180° modulo 360° einführt, wobei die Flüssigkristallzelle auf dem optischen Pfad des von der Szene stammenden Lichts (Lᵢₙ) nach dem geradlinigen Polarisator (POL1) und vor dem ersten Polarisations-Trennelement angeordnet ist, wobei das Fernrohr einen mit einem die Flüssigkristallzelle steuernden Spannungsgenerator verbundenen Schalter umfasst.

6. Fernrohr nach dem vorhergehenden Anspruch, wobei eine Durchgangsrichtung des geradlinigen Polarisators orthogonal zu einer Einfallsebene des ersten Polarisations-Trennelements ist, wobei eine langsame Achse der Flüssigkristallzelle um 45° modulo 90° zur Einfallsebene des ersten Polarisations-Trennelements ausgerichtet ist.

7. Fernrohr nach einem der vorhergehenden Ansprüche, umfassend eine Halbwellenplatte, die als stromaufwärtig bezeichnet wird und sich stromaufwärts vom geradlinigen Polarisator (POL1) befindet, der so angepasst ist, dass er eine langsame Achse parallel zur Durchgangsrichtung des geradlinigen Polarisators (POL1) aufweist, wenn dieser einen Polarisationszustand B überträgt, und eine langsame Achse aufweist, die eine Ausrichtung von 45° zur Durchgangsrichtung des geradlinigen Polarisators (POL1) aufweist, wenn dieser einen Polarisationszustand A überträgt.

8. Fernrohr nach einem der Ansprüche 2 bis 7, wobei das afokale Modul und das Videomodul abnehmbar sind.

9. Fernrohr nach einem der vorhergehenden Ansprüche, wobei die erste und die zweite Teilmenge (SAG1, SAG2) des afokalen optischen Systems so angepasst sind, dass sie jeweils ein erstes und ein zweites reales Zwischenbild (I₁, I₂) der Szene bilden, und wobei die erste und die zweite afokale Verzögerungsplatte Viertelwellenplatten sind, wobei das afokale System ferner Folgendes umfasst:
- einen ersten Spiegel (M_{R1}), der dazu angepasst ist, das reflektierte Licht (Lr) zu reflektieren, das durch die erste Teilmenge hindurchgegangen ist, um es an die erste Teilmenge zurück umzulenken,
- einen zweiten Spiegel (M_{R2}), der dazu angepasst ist, das reflektierte Licht (Lr) zu reflektieren, das durch die zweite Teilmenge hindurchgegangen ist, um es an die zweite Teilmenge zurück umzulenken.

10. Fernrohr nach einem der Ansprüche 1 bis 8, wobei die erste Teilmenge (SAG1) des afokalen optischen Systems angepasst ist, um ein reales Zwischenbild (I₁) der Szene zu bilden, und wobei die erste und die zweite afokale Verzögerungsplatte Halbwellenplatten sind, wobei das afokale System ferner Folgendes umfasst:
- ein erstes reflektierendes Element (P_{R1}), das dazu angepasst ist, das reflektierte Licht (Lr) zu reflektieren, das durch die erste Teilmenge hindurchgegangen ist, um es an die erste Teilmenge zurück umzulenken,
- ein zweites reflektierendes Element (P_{R2}), das dazu angepasst ist, das reflektierte Licht (Lr) zu reflektieren, das durch die zweite Teilmenge hindurchgegangen ist, um es an die zweite Teilmenge zurück umzulenken,
wobei das erste und/oder das zweite reflektierende Element (P_{R1}, P_{R2}) dazu angepasst sind, eine vertikale und horizontale Umkehrung eines Sichtfeldes des reflektierten Lichts durchzuführen.

11. Fernrohr nach dem vorhergehenden Anspruch, wobei das erste und das zweite reflektierende Element Umlenkprismen sind, wobei das erste und das zweite reflektierende Element (P_{R1}, P_{R2}) angepasst sind, um jeweils die vertikale und horizontale Umkehrung des Sichtfeldes des reflektierten Lichts oder umgekehrt durchzuführen.

12. Fernrohr nach Anspruch 10, wobei das erste reflektierende Element ein Tripelspiegel ist, der dazu angepasst ist, die vertikale und horizontale Umkehrung des Sichtfeldes des reflektierten Lichts durchzuführen, und das zweite Element ein Spiegel ist, oder wobei das erste reflektierende Element ein Spiegel ist und das zweite Element ein Tripelspiegel ist, der dazu angepasst ist, die vertikale und horizontale Umkehrung des Sichtfeldes des reflektierten Lichts durchzuführen.

13. Fernrohr nach einem der Ansprüche 1 bis 8, wobei die erste Teilmenge (SAG1) des afokalen optischen Systems kein reales Zwischenbild der Szene bildet, und wobei die erste und die zweite afokale Verzögerungsplatte Viertelwellenplatten sind,
wobei die erste Teilmenge durch einen konkaven Spiegel (MC1) gebildet ist, der dazu angepasst ist, das reflektierte Licht (Lr) zu reflektieren, das durch die erste Viertelwellenplatte hindurchgegangen ist
wobei die zweite Teilmenge durch einen konvexen Spiegel (MC2) gebildet ist, der dazu angepasst ist, das reflektierte Licht (Lr) zu reflektieren, das durch die zweite Viertelwellenplatte hindurchgegangen ist.

14. Fernrohr nach dem vorhergehenden Anspruch, wobei das afokale optische System ferner eine asymmetrische strahlenbrechende Komponente umfasst, die angepasst ist, um Exzentrizitätsaberrationen zu korrigieren, die durch das erste Polarisations-Trennelement beim Durchgang des reflektierten Lichts eingeführt werden.

## Claims

1. A scope (LT) observing a scene, said scope comprising a first optical subset (1), called afocal module, and a second optical subset (2), called display module,
said afocal module (1) comprising:
- a removable and switchable linear polariser (POL1) so as to transmit at least a first linear polarisation state of light (Lᵢₙ) coming from said scene, called state A, or a second linear polarisation state of said light, called B, said state B being orthogonal to said state A;
- a first polarisation-splitting element (LS1) arranged to reflect a polarisation state A of light transmitted by said linear polariser;
- an afocal optical system arranged to collect light (Lᵣ) reflected by said first polarisation-splitting element, said afocal optical system comprising:
∘ a first (SAG1) and a second (SAG2) catadioptric subset, located on either side of the first polarisation-splitting element,
∘ first and second retardation plates (LR₁, LR₂) that are called afocal and that are arranged on the path of the reflected light (Lr), on either side of the first polarisation-splitting element (LS1), respectively disposed between the first polarisation-splitting element (LS1) and the first subset (SAG1) and between the first polarisation-splitting element (LS1) and the second subset (SAG2),
said afocal optical system being adapted to form an image of the scene with an orientation identical to an orientation of the scene observed by said scope, with a magnification greater than 1, which is called the magnified image,
the first polarisation-splitting element (LS1) further being arranged to reflect light emanating from the second subset (SAG2), which is called AG light (L_{AG}), with a polarisation state A, transporting said magnified image such that the axis of sight of the AG light is collinear with a path of light transmitted by the first polarisation-splitting element, which is called direct light (L_{TM}), with a polarisation state B;
said display module comprising:
- a half-wave plate, called distribution half-wave plate (HP), that is arranged on the path of the AG light and direct light, after the first polarisation-splitting element;
- a display (EA) adapted to form a display image by emitting radiation called display light (L_{EA});
- an optical objective (Obj) adapted to collimate said display light;
- a second polarisation-splitting element (LS2) arranged, after the distribution half-wave plate, to transmit a polarisation state B, of the direct light or of the AG light, by spatially combining it with the collimated display light (L_{EA,O}), so that said scope superposes said unmagnified image or said direct light with said display image.

2. The scope according to claim 1, further comprising a third module, called the video module (3), comprising:
- a quarter-wave plate, called imaging quarter-wave plate (QP), and a mirror (M) that are adapted to convert a polarisation state A of the AG light and direct light reflected by the second polarisation-splitting element into a polarisation state B, forming a light called imaging light (Lᵢₘ), the mirror being further arranged so that said imaging light passes through said objective in order to form said magnified image or an image of the scene emanating from direct light, which is called the unmagnified image, in an image focal plane of said objective;
- a third polarisation-splitting element (LS3) arranged to reflect a polarisation state A of the display light;
- a matrix-array photodetector (C) arranged in the focal plane of said objective and adapted to detect said magnified image or said unmagnified image of the scene, the matrix-array photodetector and the display being located on either side of the third polarisation-splitting element.

3. The scope according to the preceding claim, wherein an orientation of a slow axis of said distribution half-wave plate (HP) has an orientation that is modifiable with respect to a plane of incidence of the second polarisation-splitting element (LS2).

4. The scope according to the preceding claim, wherein the matrix-array photodetector is connected to a processor adapted to apply post-processing methods to said image of the scene.

5. The scope according to any one of the preceding claims, comprising an electronically controllable liquid-crystal cell (Cell) adapted to introduce a phase delay ranging from 0° to 180° modulo 360°, said liquid-crystal cell being arranged on the optical path of the light (Lᵢₙ) coming from said scene, after the linear polariser (POL1) and before the first polarisation-splitting element, said scope comprising a switch connected to a voltage generator controlling said liquid-crystal cell.

6. The scope according to the preceding claim, wherein a passing direction of the linear polariser is orthogonal to a plane of incidence of the first polarisation-splitting element, a slow axis of the liquid-crystal cell being oriented at 45° modulo 90° to the plane of incidence of the first polarisation-splitting element.

7. The scope according to any one of the preceding claims, comprising a half-wave plate, called upstream plate, that is located upstream of the linear polariser (POL1) adapted to have a slow axis parallel to the passing direction of the linear polariser (POL1) when the latter transmits a polarisation state B and to have a slow axis having an orientation of 45° to the passing direction of the linear polariser (POL1) when the latter transmits a polarisation state A.

8. The scope according to any one of claims 2 to 7, wherein the afocal module and the video module are removable.

9. The scope according to any one of the preceding claims, wherein the first and second subsets (SAG1, SAG2) of the afocal optical system are adapted to form a first and a second real intermediate image (I₁, I₂) of the scene, respectively, and wherein the first and second afocal retardation plates are quarter-wave plates, the afocal system further comprising:
- a first mirror (M_{R1}) adapted to reflect the reflected light (Lr) having passed through the first subset so as to send it back to the first subset,
- a second mirror (M_{R2}) adapted to reflect the reflected light (Lr) having passed through the second subset so as to send it back to the second subset.

10. The scope according to any one of claims 1 to 8, wherein the first subset (SAG1) of the afocal optical system is adapted to form a real intermediate image (I₁) of the scene, and wherein the first and second afocal retardation plates are half-wave plates, the afocal system further comprising:
- a first reflective element (P_{R1}) adapted to reflect the reflected light (Lr) having passed through the first subset so as to send it back to the first subset,
- a second reflective element (P_{R2}) adapted to reflect the reflected light (Lr) having passed through the second subset so as to send it back to the second subset,
the first and/or second reflective element (P_{R1}, P_{R2}) being adapted to perform a vertical and horizontal inversion of a field of view of the reflected light.

11. The scope according to the preceding claim, wherein the first and second reflective elements are deflecting prisms, the first and second reflective elements (P_{R1}, P_{R2}) being adapted to perform the vertical and horizontal inversion of the field of view of the reflected light or vice versa, respectively.

12. The scope according to claim 10, wherein the first reflective element is a corner retroreflector adapted to perform the vertical and horizontal inversion of the field of view of the reflected light and the second element is a mirror or wherein the first reflective element is a mirror and the second element is a corner retroreflector adapted to perform the vertical and horizontal inversion of the field of view of the reflected light.

13. The scope according to any one of claims 1 to 8, wherein the first subset (SAG1) of the afocal optical system does not form any real intermediate image of the scene, and wherein the first and second afocal retardation plates are quarter-wave plates,
the first subset being formed by a concave mirror (MC1) adapted to reflect the reflected light (Lr) having passed through the first quarter-wave plate,
the second subset being formed by a convex mirror (MC2) adapted to reflect the reflected light (Lr) having passed through the second quarter-wave plate.

14. The scope according to the preceding claim, wherein the afocal optical system further comprises an asymmetric refractive component adapted to correct eccentricity aberrations introduced by the first polarisation-splitting element as reflected light passes therethrough.
